# FASCICULE DE BREVET EUROPEEN

(11) **EP 3 530 925 B1**
(45) Date de publication et mention de la délivrance du brevet: **16.12.2020**
(21) Numéro de dépôt: 19153410.6
(22) Date de dépôt: 24.01.2019
(51) Int. Cl.: F02K 1/72

(54) **TURBOREACTEUR COMPORTANT UNE NACELLE EQUIPEE D'UN SYSTEME INVERSEUR COMPORTANT DES PORTES EXTERIEURES ET INTERIEURES**
TURBOREAKTOR, DER EINE MIT EINEM UMKEHRSCHUBSYSTEM AUSGESTATTETE GONDEL MIT AUSSEN- UND INNENTÜREN UMFASST
TURBINE ENGINE COMPRISING A NACELLE PROVIDED WITH A REVERSER SYSTEM COMPRISING OUTER AND INNER DOORS

(30) Priorité: 22.02.2018 FR 1851556
(43) Date de publication de la demande: 28.08.2019
(73) Titulaire: Airbus (S.A.S.), 31700 Blagnac (FR); Airbus Operations S.A.S., 31060 Toulouse (FR)
(72) Inventeur: BARDEY, Xavier, 31820 PIBRAC (FR); BROSSARD, Denis, 44860 SAINT AIGNAN DE GRAND LIEU (FR); DESCAMPS, Philippe, 44400 REZE (FR); LE CLAINCHE, Stéphane, 44640 CHEIX EN RETZ (FR); RAMBAUD, Eric, 44840 LES SORINIERES (FR); RIDRAY, Frédéric, 32600 L'ISLE JOURDAIN (FR)
(74) Mandataire: Gicquel, Olivier Yves Gérard

(56) Documents cités:
- EP-A1- 3 244 051
- EP-A2- 3 103 995
- RU-C1- 2 044 912
- US-A- 3 815 357

## Description

La présente invention concerne un turboréacteur double flux qui comporte une nacelle équipée d'un système inverseur comportant des portes extérieures et intérieures, ainsi qu'un aéronef comportant au moins un tel turboréacteur double flux.

Un aéronef comporte un fuselage de chaque côté duquel est fixée une aile. Sous chaque aile est suspendu au moins un turboréacteur double flux avec une veine secondaire. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur pour délimiter entre eux une veine secondaire.

La nacelle comporte un système inverseur qui comprend une pluralité de portes intérieures, où chacune est mobile entre une position stockée dans laquelle elle est plaquée contre une surface intérieure de la nacelle autour de la veine secondaire, et une position déployée dans laquelle elle est positionnée en travers de la veine secondaire pour diriger le flux secondaire vers une fenêtre dégagée dans la nacelle par le déplacement de la porte intérieure.

Il est intéressant de pouvoir trouver un système d'inversion de poussée qui soit optimisé et mis en œuvre par un mécanisme simple. La demande de brevet EP3103995 décrit, à cet effet, un turboréacteur double flux avec un système d'inversion à double porte dans lequel le turboréacteur présente une structure fixe, un actionneur et un ensemble mobile comportant des portes et formant un cadre avec un capot mobile. Pour chaque paire de portes, le turboréacteur comporte un support de rotation solidaire du cadre. Le déploiement des portes consiste à activer l'actionneur pour repousser l'ensemble mobile portant les portes, puis à arrêter le cadre à l'aide d'un frein, puis à continuer d'activer l'actionneur pour repousser un système de transmission de type à bielles pour déployer les portes.

Un objet de la présente invention est de proposer une alternative au système d'inversion à double portes décrit dans la demande de brevet susmentionnée.

A cet effet, est proposé un turboréacteur double flux tel que revendiqué dans la revendication 1.

Un tel turboréacteur permet d'optimiser l'inverseur de poussée par la mise en place de portes intérieures et extérieures, de simplifier le mécanisme actionnant le système inverseur et de dissocier le déplacement de l'ensemble mobile du déplacement des portes extérieures et intérieures.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant un turboréacteur double flux selon l'invention,
la Fig. 2 est une vue en perspective et de l'intérieur d'une partie d'une nacelle du turboréacteur double flux selon l'invention,
la Fig. 3 est une représentation schématique et en coupe d'un système inverseur selon l'invention en position avancée et stockée,
la Fig. 4 est une représentation similaire à celle de la Fig. 3 pour une position intermédiaire correspondant à une position reculée et stockée,
la Fig. 5 est une représentation similaire à celle de la Fig. 3 pour une position reculée et déployée, et
la Fig. 6 montre une vue extérieure du système inverseur.

Dans la description qui suit, les termes relatifs à une position sont pris en référence au sens d'avancement de l'aéronef et l'écoulement de l'air dans le turboréacteur s'écoule donc de l'avant vers l'arrière de l'aéronef tandis que l'aéronef se déplace vers l'avant.

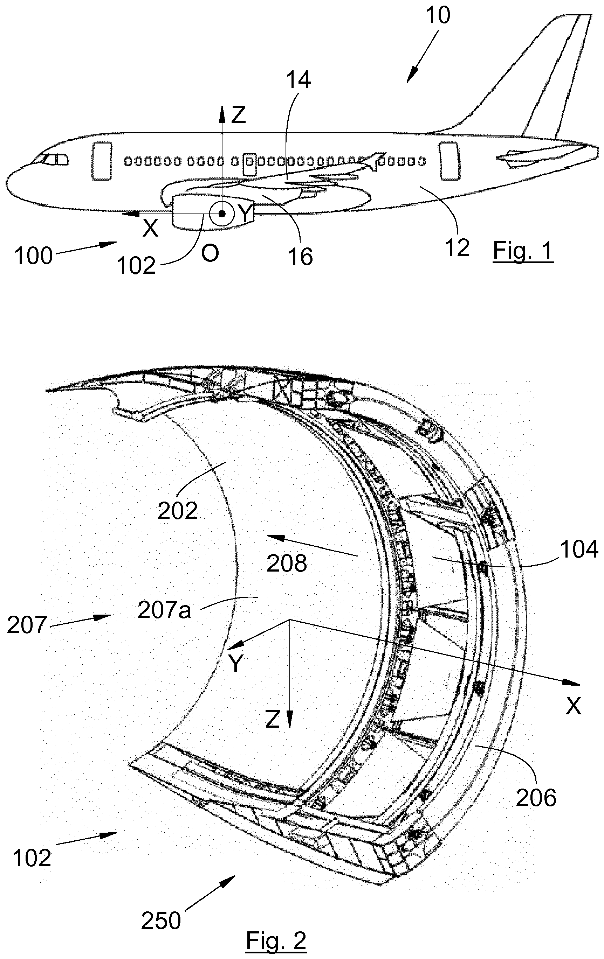

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Le turboréacteur double flux 100 présente une nacelle 102, un moteur qui est logé à l'intérieur de la nacelle 102 sous forme d'un noyau et un carter de soufflante 206a en avant de la nacelle 102.

Dans la description qui suit, et par convention, on appelle X l'axe longitudinal du turboréacteur double flux 100 qui est parallèle à l'axe longitudinal de l'aéronef 10 orienté positivement vers l'avant de l'aéronef 10, on appelle Y l'axe transversal qui est horizontal lorsque l'aéronef est au sol, et Z l'axe vertical, ces trois directions X, Y et Z étant orthogonales entre elles.

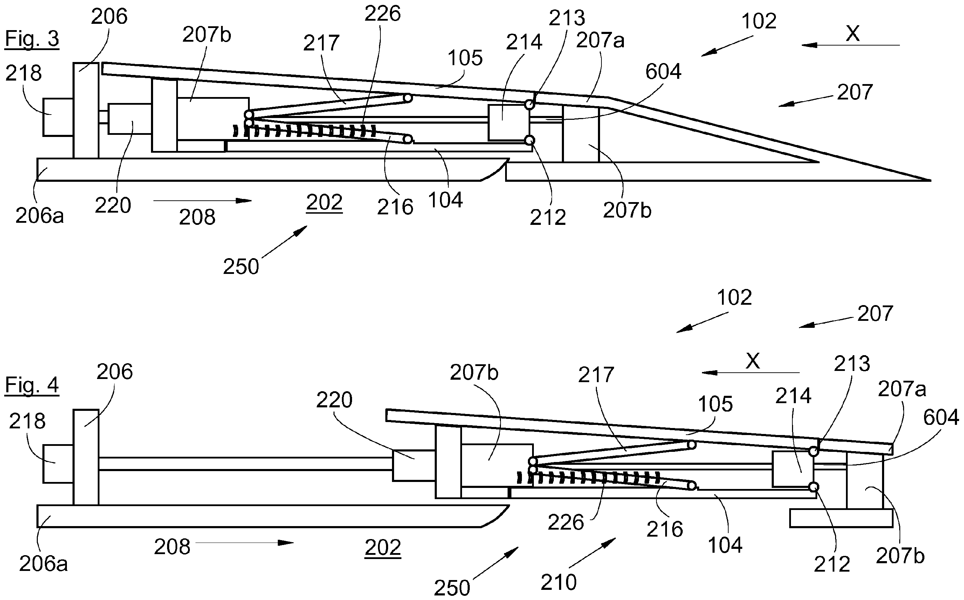

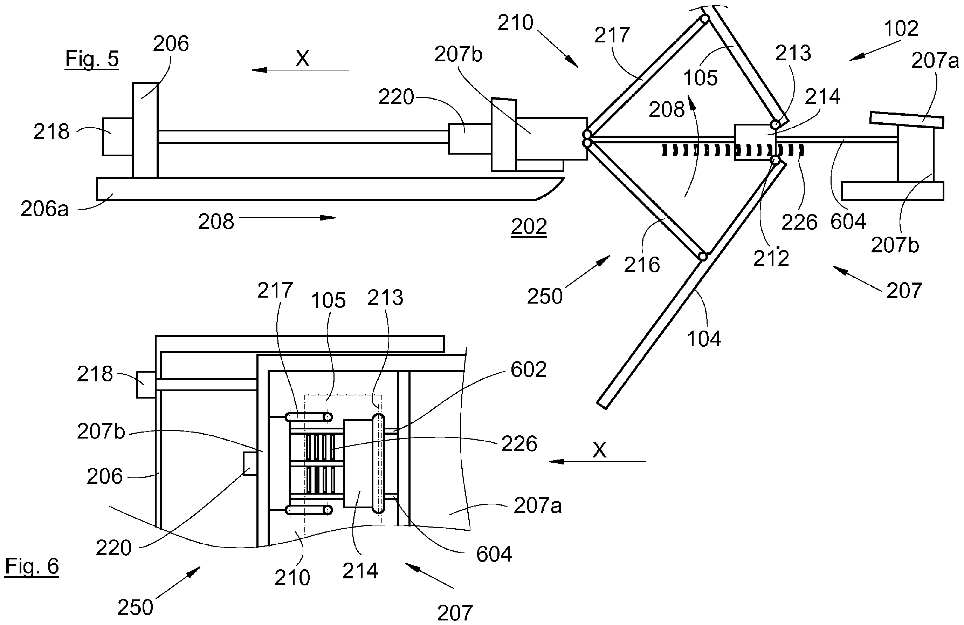

La Fig. 2 montre une partie de la nacelle 102 et les Figs. 3 à 5 montrent différentes positions d'un système inverseur 250 de la nacelle 102. La Fig. 6 montre une vue extérieure du système inverseur 250 en position reculée et déployée, mais où seule une porte extérieure 105 est schématisée par des traits mixtes.

Le turboréacteur double flux 100 présente entre la nacelle 102 et le moteur, une veine secondaire 202 dans laquelle circule le flux secondaire 208 provenant de l'entrée d'air à travers la soufflante et qui s'écoule donc selon le sens d'écoulement qui va de l'avant vers l'arrière de la nacelle 102.

La nacelle 102 présente une structure fixe 206 qui est montée fixe sur le carter de soufflante 206a.

Le système inverseur 250 présente un ensemble mobile 207 qui comprend un capot mobile 207a formant les parois de la tuyère et un cadre 207b. Le cadre 207b prend ici la forme d'un cylindre à parois ajourées. Le capot mobile 207a est fixé au et à l'arrière du cadre 207b.

L'ensemble mobile 207, par l'intermédiaire du cadre 207b, est monté mobile en translation selon une direction de translation globalement parallèle à l'axe longitudinal X sur la structure fixe 206 de la nacelle 102, et plus particulièrement ici sur la poutre 12heure et la poutre 6heure.

La translation du cadre 207b, et donc de l'ensemble mobile 207, est réalisée par tout système de glissière approprié comme par exemple des glissières entre la structure fixe 206 et le cadre 207b.

L'ensemble mobile 207, et donc le cadre 207b, est mobile entre une position avancée (Fig. 3) et une position reculée (Figs. 4, 5 et 6) et inversement. En position avancée, l'ensemble mobile 207, et donc le cadre 207b, est positionné le plus en avant possible par rapport à l'axe longitudinal X de manière à ce que le capot mobile 207a soit rapproché du carter de soufflante 206a. En position reculée, l'ensemble mobile 207, et donc le cadre 207b, est positionné le plus en arrière possible par rapport à l'axe longitudinal X de manière à ce que le capot mobile 207a soit éloigné vers l'arrière du carter de soufflante 206a.

En position avancée, le capot mobile 207a et le carter de soufflante 206a se prolongent de manière à définir la surface extérieure de la veine secondaire 202.

En position reculée, le capot mobile 207a et le carter de soufflante 206a sont à distance et définissent entre eux une fenêtre 210 ouverte entre la veine secondaire 202 et l'extérieur de la nacelle 102. C'est-à-dire que l'air provenant du flux secondaire 208 traverse la fenêtre 210 pour rejoindre l'extérieur du turboréacteur double flux 100.

Le carter de soufflante 206a délimite la fenêtre 210 en avant par rapport à l'axe longitudinal X et le capot mobile 207a délimite la fenêtre 210 en arrière par rapport à l'axe longitudinal X.

La nacelle 102 comporte une pluralité de portes intérieures 104 réparties sur la périphérie et à l'intérieur de la nacelle 102 en fonction de l'ouverture angulaire de la fenêtre 210 autour de l'axe longitudinal X.

Chaque porte intérieure 104 est montée articulée sur un coulisseau 214 entre une position stockée (Figs. 3 et 4) et une position déployée (Fig. 5) et inversement. Le passage de la position stockée à la position déployée s'effectue par une rotation de la porte intérieure 104 vers l'intérieur du turboréacteur 100. L'articulation s'effectue le long d'un bord arrière de la porte intérieure 104 tandis que le bord avant de la porte intérieure 104 se déplace.

La position stockée des portes intérieures 104 peut être adoptée lorsque le cadre 207b est en position avancée ou en position reculée. La position déployée des portes intérieures 104 ne peut être adoptée que lorsque le cadre 207b est en position reculée.

En position stockée, chaque porte intérieure 104 obture une zone de la partie ajourée du cadre 207b lorsque ce dernier est en position avancée et la même zone de la partie ajourée du cadre 207b et une zone de la fenêtre 210 lorsque le cadre 207b est en position reculée. En position déployée, la porte intérieure 104 n'obture pas ladite zone de la fenêtre 210 ni la partie ajourée du cadre 207b permettant le passage du flux secondaire 208 et la porte intérieure 104 s'étend vers le moteur, c'est-à-dire en travers de la veine secondaire 202.

Ainsi, en position stockée et avancée, chaque porte intérieure 104 se positionne à l'extérieur du carter de soufflante 206a et en position déployée, chaque porte intérieure 104 se positionne en travers de la veine secondaire 202 et dévie au moins une partie du flux secondaire 208 vers l'extérieur à travers la fenêtre 210, le flux est orienté vers l'avant à l'aide de portes extérieures 105 permettant de produire une contre-poussée et décrites ci-dessous.

Chaque porte intérieure 104 est articulée par son bord arrière au coulisseau 214 sur des charnières 212 fixées au coulisseau 214 tandis que le bord avant opposé est libre et se positionne vers l'avant en position stockée et vers le moteur en position déployée.

Le système inverseur 250 comporte également pour chaque porte intérieure 104, une porte extérieure 105. Les portes extérieures 105 sont réparties sur la périphérie et à l'extérieur de la nacelle 102 en fonction de l'ouverture angulaire de la fenêtre 210 autour de l'axe longitudinal X. Les portes extérieures 105 sont disposées à l'extérieur par rapport aux portes intérieures 104. Chaque porte extérieure 105 est montée en regard d'une porte intérieure 104 et la porte extérieure 105 et la porte intérieure 104 en regard constituent un couple de portes. Le système inverseur 250 comporte ainsi une pluralité de couples de portes 104, 105 disposées à l'intérieur de la nacelle 102.

Chaque porte extérieure 105 est montée articulée sur le coulisseau 214 entre une position stockée (Figs. 3 et 4) et une position déployée (Fig. 5) et inversement. Le passage de la position stockée à la position déployée s'effectue par une rotation de la porte extérieure 105 vers l'extérieur du turboréacteur 100. Les articulations des portes extérieures 105 sont globalement en regard des articulations des portes intérieures 104, ainsi comme cela est montré sur la Fig. 5, lorsque les portes intérieures 104 et les portes extérieures 105 sont déployées, elles forment globalement une continuité.

La position stockée des portes extérieures 105 peut être adoptée lorsque le cadre 207b est en position avancée ou en position reculée. La position déployée ne peut être adoptée que lorsque le cadre 207b est en position reculée. La position déployée, respectivement stockée, des portes extérieures 105 est synchronisée avec la position déployée, respectivement stockée, des portes intérieures 104.

En position stockée, chaque porte extérieure 105 obture une zone de la partie ajourée du cadre 207b lorsque ce dernier est en position avancée et la même zone de la partie ajourée du cadre 207b et une zone de la fenêtre 210 lorsque le cadre 207b est en position reculée. En position déployée, la porte extérieure 105 n'obture pas ladite zone de la fenêtre 210 ni la partie ajourée du cadre 207b et s'étend vers l'extérieur de la nacelle 102 permettant le passage du flux secondaire 208.

Ainsi, en position stockée et avancée, chaque porte extérieure 105 est globalement dans le prolongement du capot mobile 207a à l'extérieur du carter de soufflante 206a et en position déployée, chaque porte extérieure 105 s'ouvre vers l'extérieur et dévie la partie du flux secondaire 208 qui a été préalablement déviée par les portes intérieures 104 à travers la fenêtre 210.

En position stockée, les portes extérieures 105 sont disposées entre le capot mobile 207a et la structure fixe 206 de manière à constituer une paroi extérieure de la nacelle 102 qui est donc en contact avec le flux d'air qui s'écoule autour de la nacelle 102.

Chaque porte extérieure 105 est articulée par un bord arrière au coulisseau 214 sur des charnières 213 fixées au coulisseau 214 tandis que le bord avant opposé est libre et se positionne vers l'avant en position stockée et vers l'extérieur en position déployée.

Pour chaque couple de portes 104, 105, le système inverseur 250 présente donc un coulisseau 214 associé audit couple de portes 104, 105. Le coulisseau 214 est monté mobile en translation selon une direction parallèle à la direction de translation sur le cadre 207b. Le coulisseau 214 est ainsi mobile entre une première position qui correspond à la position stockée et une deuxième position qui correspond à la position déployée. Chaque porte 104, 105 est ainsi articulée sur le coulisseau 214 et est donc indépendante du capot mobile 207 et elle n'y est pas fixée.

Le passage de la première position à la deuxième position du coulisseau 214 est mécaniquement associé au passage de la position stockée à la position déployée de chaque porte 104, 105 et inversement.

Dans le mode de réalisation particulier présenté ici, le système inverseur 250 présente également, pour chaque coulisseau 214, un premier système de transmission 216 qui est prévu pour faire passer la porte intérieure 104 associée au coulisseau 214, de la position stockée à la position déployée simultanément, au passage du coulisseau 214 de la première position à la deuxième position afin d'ouvrir la porte intérieure 104 et inversement.

De la même manière, le système inverseur 250 présente également, pour ledit coulisseau 214, un deuxième système de transmission 217 qui est prévu pour faire passer la porte extérieure 105 associée au coulisseau 214, de la position stockée à la position déployée simultanément, au passage du coulisseau 214 de la première position à la deuxième position afin d'ouvrir la porte extérieure 105 et inversement.

Dans le mode de réalisation de l'invention présenté ici, pour atteindre la première position, le coulisseau 214 est déplacé vers l'arrière tandis que pour atteindre la deuxième position, le coulisseau 214 est déplacé vers l'avant.

La translation du coulisseau 214 sur le cadre 207b est réalisée par tout système de glissière approprié comme, par exemple, celui qui est décrit ci-dessous.

Le passage de la position avancée du cadre 207b à la position reculée du cadre 207b et déployée des portes intérieures 104 et des portes extérieures 105 consiste donc, à partir de la position avancée du cadre 207b et donc des positions stockées des portes intérieures 104 et extérieures 105, à reculer le cadre 207b par translation par rapport au cadre avant 206 pour atteindre la position reculée pour le cadre 207b et les positions stockées des portes intérieures 104 et extérieures 105, puis à déplacer chaque coulisseau 214 de la première position à la deuxième position, c'est-à-dire vers l'avant, pour faire passer les portes intérieures 104 et les portes extérieures 105 de la position stockée à la position déployée.

Le déplacement inverse permet de revenir à la position avancée.

La nacelle 102 comporte également un ensemble d'actionneurs 218 et 220 assurant le déplacement en translation du cadre 207b et du coulisseau 214. Chaque actionneur 218, 220 est commandé par une unité de contrôle, par exemple du type processeur, qui commande les déplacements dans un sens ou dans l'autre selon les besoins de l'aéronef 10.

Chaque actionneur 218, 220 peut prendre par exemple la forme d'un vérin électrique à billes ou tout autre type de vérins appropriés.

Pour assurer le déplacement du cadre 207b, la nacelle 102 comporte au moins un premier actionneur 218 fixé pour une partie à la structure fixe 206 de la nacelle 102 et pour une partie au cadre 207b. Chaque premier actionneur 218 est ainsi prévu pour assurer, à partir de la position avancée du cadre 207b et donc des positions stockées des portes intérieures 104 et extérieures 105, un déplacement en translation du cadre 207b jusqu'à la position reculée, et inversement. Lors du déplacement du cadre 207b, chaque coulisseau 214 qui est porté par le cadre 207b suit le même déplacement.

Ici, le cylindre du premier actionneur 218 est fixé à la structure fixe 206 et la tige mobile du premier actionneur 218 est fixée au cadre 207b.

Pour assurer le déplacement de chaque coulisseau 214, et donc de chaque porte intérieure 104 et extérieure 105, le système inverseur 250 comporte, pour chaque coulisseau 214, un deuxième actionneur 220 qui est fixé pour une partie au cadre 207b et pour une partie au coulisseau 214. Le deuxième actionneur 220 est prévu pour assurer le déplacement en translation du coulisseau 214 de la première position à la deuxième position.

Ici le cylindre du deuxième actionneur 220 est fixé au cadre 207b et la tige mobile du deuxième actionneur 220 est fixée au coulisseau 214.

Le deuxième actionneur 220 est distinct de chaque premier actionneur 218 et ils peuvent donc être déplacés indépendamment les uns des autres. Le déplacement de l'ensemble mobile 207 de la position avancée à la position reculée est dissocié du déplacement des portes 104 et 105.

La Fig. 6 montre une vue extérieure de la nacelle 102 qui montre le système de glissière entre le cadre 207b et le coulisseau 214.

Pour réaliser le système de glissière, le cadre 207b comporte deux tiges 602 disposées en travers de la fenêtre 210 et s'étendant parallèlement à la direction de translation. Pour chaque tige 602, 604, le coulisseau 214 présente un alésage dans lequel est emmanchée ladite tige 602, 604 ce qui permet au coulisseau 214 de se déplacer le long des tiges 602 et 604.

Le premier système de transmission 216 comporte au moins une première tringle articulée par une extrémité à la porte intérieure 104 et articulée par une autre extrémité à l'ensemble mobile 207 et plus particulièrement à une partie du cadre 207b disposé en avant par rapport à l'articulation de la première tringle à la porte intérieure 104.

Pour des raisons d'équilibrage, le premier système de transmission 216 comporte deux premières tringles disposées de part et d'autre d'un plan médian de la porte intérieure 104 et passant par l'axe longitudinal X.

Le deuxième système de transmission 217 comporte au moins une deuxième tringle articulée par une extrémité à la porte extérieure 105 et articulée par une autre extrémité à l'ensemble mobile 207 et plus particulièrement à une partie du cadre 207b disposé en avant par rapport à l'articulation de la deuxième tringle à la porte extérieure 105.

De la même manière, pour des raisons d'équilibrage, le deuxième système de transmission 217 comporte deux deuxièmes tringles disposées de part et d'autre d'un plan médian de la porte extérieure 105 et passant par l'axe longitudinal X comme cela est représenté sur la Fig. 6.

L'invention a été plus particulièrement décrite dans le cas d'une nacelle sous une aile mais elle peut s'appliquer à une nacelle située à l'arrière du fuselage.

Pour contrôler encore mieux le flux secondaire 208, la nacelle 102 comporte au moins un déflecteur 226 (s'il y en a plusieurs c'est alors une grille de type cascade) qui est disposé autour de la veine secondaire 202 au niveau de l'entrée de la fenêtre 210, c'est-à-dire globalement au niveau de la zone de passage de la veine secondaire 202 à la fenêtre 210 dans une zone où l'écoulement a le plus de mal à tourner pour créer de la poussée inversée (c'est-à-dire vers l'avant de la nacelle).

Chaque déflecteur 226 est fixé à l'ensemble mobile 207 de la nacelle 102. Chaque déflecteur 226 prend la forme d'un aileron qui oriente le flux secondaire 208 vers la fenêtre 210 puis vers l'avant du turboréacteur double flux 100. Dans le mode de réalisation de l'invention présenté ici, en position de fermeture, chaque déflecteur 226 est logé dans la structure fixe 206 entre la porte extérieure 105 et la porte intérieure 104.

Dans le mode de réalisation de l'invention présenté à la Fig. 6, les déflecteurs 226 sont disposés entre les tiges 602 et 604.

## Revendications

1. Turboréacteur double flux (100) comportant un moteur, une nacelle (102) entourant le moteur et un carter de soufflante, où une veine secondaire (202) d'un flux secondaire (208) est délimitée entre la nacelle (102) et le moteur et dans laquelle un flux d'air circule selon un sens d'écoulement, ladite nacelle (102) comportant :
- une structure fixe (206) attachée au carter de soufflante (206a),
- un système inverseur (250) présentant :
- un ensemble mobile (207) présentant un cadre (207b) et un capot mobile (207a) fixé au cadre (207b), l'ensemble mobile (207) étant mobile en translation sur la structure fixe (206) selon une direction de translation entre une position avancée dans laquelle l'ensemble mobile (207) est positionné de manière à ce que le capot mobile (207a) soit rapproché du carter de soufflante (206a) et une position reculée dans laquelle l'ensemble mobile (207) est positionné de manière à ce que le capot mobile (207a) soit éloigné du carter de soufflante (206a) pour définir entre eux une fenêtre (210) ouverte entre la veine secondaire (202) et l'extérieur de la nacelle (102),
- une pluralité de couples de portes, chaque couple étant formé par une porte intérieure (104) et une porte extérieure (105) disposée en regard de la porte intérieure (104),
- pour chaque couple de portes (104, 105), un coulisseau (214) monté mobile en translation parallèlement à la direction de translation sur le cadre (207b) entre une première position et une deuxième position,
où chaque porte (104, 105) d'un couple est montée articulée par un bord arrière sur le coulisseau (214) associé, entre une position stockée dans laquelle elle obture une zone de la fenêtre (210) et une position déployée dans laquelle elle n'obture pas ladite zone de la fenêtre (210), les portes intérieures (104) s'étendant vers le moteur en position déployée, les portes extérieures (105) s'étendant vers l'extérieur de la nacelle (102) en position déployée,
- pour chaque coulisseau (214), un premier système de transmission (216) prévu pour faire passer la porte intérieure (104) associée au coulisseau (214), de la position stockée à la position déployée simultanément, au passage du coulisseau (214) de la première position à la deuxième position et inversement, et un deuxième système de transmission (217) prévu pour faire passer la porte extérieure (105) associée au coulisseau (214), de la position stockée à la position déployée simultanément au passage du coulisseau (214) de la première position à la deuxième position et inversement, et
- au moins un premier actionneur (218) prévu pour assurer le déplacement en translation du cadre (207b) de la position avancée à la position reculée et inversement, et
- pour chaque coulisseau (214), un deuxième actionneur (220) fixé en partie au cadre (207b) et prévu pour assurer le déplacement en translation du coulisseau (214) de la première position à la deuxième position et inversement.

2. Turboréacteur double flux (100) selon la revendication 1, **caractérisé en ce que** le cadre (207b) comporte deux tiges (602, 604) disposées en travers de la fenêtre (210) et s'étendant parallèlement à la direction de translation, et **en ce que** pour chaque tige (602, 604), le coulisseau (214) présente un alésage dans lequel est emmanchée ladite tige (602, 604).

3. Turboréacteur double flux (100) selon l'une des revendications 1 ou 2, **caractérisé en ce que** le premier système de transmission (216) comporte au moins une première tringle articulée par une extrémité à la porte intérieure (104) et articulée par une autre extrémité au cadre (207b).

4. Turboréacteur double flux (100) selon la revendication 3, **caractérisé en ce que** le premier système de transmission (216) comporte deux premières tringles disposées de part et d'autre d'un plan médian de la porte intérieure (104).

5. Turboréacteur double flux (100) selon l'une des revendications 3 ou 4, **caractérisé en ce que** l'articulation au niveau du cadre (207b) est disposée en avant par rapport à l'articulation de la première tringle à la porte intérieure (104).

6. Turboréacteur double flux (100) selon l'une des revendications 1 à 4, **caractérisé en ce que** le deuxième système de transmission (217) comporte au moins une deuxième tringle articulée par une extrémité à la porte extérieure (105) et articulée par une autre extrémité au cadre (207b).

7. Turboréacteur double flux (100) selon la revendication 6, **caractérisé en ce que** le deuxième système de transmission (217) comporte deux deuxièmes tringles disposées de part et d'autre d'un plan médian de la porte extérieure (105).

8. Turboréacteur double flux (100) selon l'une des revendications 6 ou 7, **caractérisé en ce que** l'articulation au niveau du cadre (207b) est disposée en avant par rapport à l'articulation de la deuxième tringle à la porte extérieure (105).

9. Turboréacteur double flux (100) selon l'une des revendications 1 à 8, **caractérisé en ce que** les portes extérieures (105) sont disposées entre le capot mobile (207a) et la structure fixe (206) en position stockée de manière à constituer une paroi extérieure de la nacelle (102).

10. Aéronef (10) comportant au moins un turboréacteur double flux (100) selon l'une des revendications précédentes.

## Patentansprüche

1. Mantelstromtriebwerk (100), welches ein Triebwerk, eine das Triebwerk umgebende Gondel (102) und ein Gebläsegehäuse umfasst, wobei ein Mantelstromkanal (202) eines Mantelstroms (208) zwischen der Gondel (102) und dem Triebwerk begrenzt wird, in welchem ein Luftstrom in einer Strömungsrichtung fließt, wobei die Gondel (102) umfasst:
- eine feste Struktur (206), die am Gebläsegehäuse (206a) befestigt ist,
- ein Schubumkehrsystem (250), welches aufweist:
- eine bewegliche Anordnung (207), die einen Rahmen (207b) und eine bewegliche Haube (207a), die an dem Rahmen (207b) befestigt ist, aufweist, wobei die bewegliche Anordnung (207) auf der festen Struktur (206) in einer Translationsrichtung translatorisch beweglich ist zwischen einer vorgeschobenen Position, in welcher die bewegliche Anordnung (207) so positioniert ist, dass die bewegliche Haube (207a) dem Gebläsegehäuse (206a) genähert ist, und einer zurückgezogenen Position, in welcher die bewegliche Anordnung (207) so positioniert ist, dass die bewegliche Haube (207a) von dem Gebläsegehäuse (206a) entfernt ist, um zwischen ihnen ein zwischen dem Mantelstromkanal (202) und der Außenseite der Gondel (102) geöffnetes Fenster (210) zu definieren,
- mehrere Paare von Türen, wobei jedes Paar von einer inneren Tür (104) und einer gegenüber der inneren Tür (104) angeordneten äußeren Tür (105) gebildet wird,
- für jedes Paar von Türen (104, 105) ein Gleitstück (214), das parallel zur Translationsrichtung translatorisch beweglich zwischen einer ersten Position und einer zweiten Position auf dem Rahmen (207b) angeordnet ist,
wobei jede Tür (104, 105) eines Paares mit einem hinteren Rand am zugeordneten Gleitstück (214) beweglich zwischen einer Ruheposition, in welcher sie einen Bereich des Fensters (210) verschließt, und einer ausgeklappten Position, in welcher sie den Bereich des Fensters (210) nicht verschließt, angelenkt ist, wobei sich die inneren Türen (104) in der ausgeklappten Position zum Triebwerk hin erstrecken, wobei sich die äußeren Türen (105) in der ausgeklappten Position zur Außenseite der Gondel (102) hin erstrecken,
- für jedes Gleitstück (214) ein erstes Übertragungssystem (216), das dafür vorgesehen ist zu bewirken, dass gleichzeitig mit dem Übergang des Gleitstücks (214) von der ersten Position zur zweiten Position die dem Gleitstück (214) zugeordnete innere Tür (104) von der Ruheposition zur ausgeklappten Position übergeht, und umgekehrt, und ein zweites Übertragungssystem (217), das dafür vorgesehen ist zu bewirken, dass gleichzeitig mit dem Übergang des Gleitstücks (214) von der ersten Position zur zweiten Position die dem Gleitstück (214) zugeordnete äußere Tür (105) von der Ruheposition zur ausgeklappten Position übergeht, und umgekehrt, und
- wenigstens einen ersten Stellantrieb (218), der dafür vorgesehen ist, die translatorische Bewegung des Rahmens (207b) von der vorgeschobenen Position zur zurückgezogenen Position, und umgekehrt, sicherzustellen,
- für jedes Gleitstück (214) einen zweiten Stellantrieb (220), der teilweise am Rahmen (207b) befestigt ist und dafür vorgesehen ist, die translatorische Bewegung des Gleitstücks (214) von der ersten Position zur zweiten Position, und umgekehrt, sicherzustellen.

2. Mantelstromtriebwerk (100) nach Anspruch 1, **dadurch gekennzeichnet, dass** der Rahmen (207b) zwei Stäbe (602, 604) umfasst, die durch das Fenster (210) hindurch angeordnet sind und sich parallel zur Translationsrichtung erstrecken, und dadurch, dass das Gleitstück (214) für jeden Stab (602, 604) eine Bohrung aufweist, in welche der Stab (602, 604) eingesteckt ist.

3. Mantelstromtriebwerk (100) nach einem der Ansprüche 1 oder 2, **dadurch gekennzeichnet, dass** das erste Übertragungssystem (216) wenigstens eine erste Stange umfasst, die mit einem Ende an der inneren Tür (104) angelenkt ist und mit einem anderen Ende am Rahmen (207b) angelenkt ist.

4. Mantelstromtriebwerk (100) nach Anspruch 3, **dadurch gekennzeichnet, dass** das erste Übertragungssystem (216) zwei erste Stangen umfasst, die beiderseits einer Mittelebene der inneren Tür (104) angeordnet sind.

5. Mantelstromtriebwerk (100) nach einem der Ansprüche 3 oder 4, **dadurch gekennzeichnet, dass** die Anlenkung am Rahmen (207b) weiter vorn als die Anlenkung der ersten Stange an der inneren Tür (104) angeordnet ist.

6. Mantelstromtriebwerk (100) nach einem der Ansprüche 1 bis 4, **dadurch gekennzeichnet, dass** das zweite Übertragungssystem (217) wenigstens eine zweite Stange umfasst, die mit einem Ende an der äußeren Tür (105) angelenkt ist und mit einem anderen Ende am Rahmen (207b) angelenkt ist.

7. Mantelstromtriebwerk (100) nach Anspruch 6, **dadurch gekennzeichnet, dass** das zweite Übertragungssystem (217) zwei zweite Stangen umfasst, die beiderseits einer Mittelebene der äußeren Tür (105) angeordnet sind.

8. Mantelstromtriebwerk (100) nach einem der Ansprüche 6 oder 7, **dadurch gekennzeichnet, dass** die Anlenkung am Rahmen (207b) weiter vorn als die Anlenkung der zweiten Stange an der äußeren Tür (105) angeordnet ist.

9. Mantelstromtriebwerk (100) nach einem der Ansprüche 1 bis 8, **dadurch gekennzeichnet, dass** die äußeren Türen (105) in der Ruheposition zwischen der beweglichen Haube (207a) und der festen Struktur (206) angeordnet sind, so dass sie eine äußere Wand der Gondel (102) bilden.

10. Luftfahrzeug (10), welches wenigstens ein Mantelstromtriebwerk (100) nach einem der vorhergehenden Ansprüche umfasst.

## Claims

1. Turbofan engine (100) comprising a motor, a nacelle (102) surrounding the motor and a fan casing, wherein a secondary duct (202) for a secondary flow (208) is delimited between the nacelle (102) and the motor, and wherein a flow of air flows in a flow direction, said nacelle (102) comprising:
- a fixed structure (206) attached to the fan casing (206a),
- a reverser system (250) having:
- a mobile assembly (207) having a frame (207b) and a mobile cowl (207a) secured to the frame (207b), the mobile assembly (207) being able to move in translation on the fixed structure (206) in a direction of translation between an advanced position in which the mobile assembly (207) is positioned in such a way that the mobile cowl (207a) is moved close to the fan casing (206a) and a retracted position in which the mobile assembly (207) is positioned in such a way that the mobile cowl (207a) is moved away from the fan casing (206a) so as to define between them an open window (210) between the secondary duct (202) and the exterior of the nacelle (102),
- a plurality of pairs of doors, each pair being formed by an inner door (104) and an outer door (105) that is arranged facing the inner door (104),
- for each pair of doors (104, 105), a slider (214) mounted so as to be able to move in translation parallel to the direction of translation on the frame (207b), between a first position and a second position,
- where each door (104, 105) of a pair is mounted so as to be articulated by a rear edge on the associated slider (214), between a stowed position in which it closes off a region of the window (210) and a deployed position in which it does not close off said region of the window (210), the inner doors (104) extending towards the motor in the deployed position, the outer doors (105) extending towards the exterior of the nacelle (102) in the deployed position,
- for each slider (214), a first transmission system (216) that is intended to make the inner door (104) associated with the slider (214) pass from the stowed position to the deployed position simultaneously with the slider (214) passing from the first position to the second position and vice versa, and a second transmission system (217) intended to make the outer door (105) associated with the slider (214) pass from the stowed position to the deployed position simultaneously with the slider (214) passing from the first position to the second position and vice versa, and
- at least one first actuator (218) intended to make the frame (207b) move in translation from the advanced position to the retracted position and vice versa, and
- for each slider (214), a second actuator (220) partially fixed to the frame (207b) and intended to make the slider (214) move in translation from the first position to the second position and vice versa.

2. Turbofan engine (100) according to Claim 1, **characterized in that** the frame (207b) comprises two stems (602, 604) that are arranged across the window (210) and that extend parallel to the direction of translation, and **in that**, for each stem (602, 604), the slider (214) has a bore into which said stem (602, 604) is press-fitted.

3. Turbofan engine (100) according to either of Claims 1 and 2, **characterized in that** the first transmission system (216) comprises at least one first connecting rod that is articulated at one end to the inner door (104) and articulated at another end to the frame (207b).

4. Turbofan engine (100) according to Claim 3, **characterized in that** the first transmission system (216) comprises two first connecting rods arranged on either side of a median plane of the inner door (104) .

5. Turbofan engine (100) according to either of Claims 3 and 4, **characterized in that** the articulation at the frame (207b) is arranged forward of the articulation of the first connecting rod to the inner door (104).

6. Turbofan engine (100) according to one of Claims 1 to 4, **characterized in that** the second transmission system (217) comprises at least one second connecting rod that is articulated at one end to the outer door (105) and articulated at another end to the frame (207b).

7. Turbofan engine (100) according to Claim 6, **characterized in that** the second transmission system (217) comprises two second connecting rods arranged on either side of a median plane of the outer door (105) .

8. Turbofan engine (100) according to either of Claims 6 and 7, **characterized in that** the articulation at the frame (207b) is arranged forward of the articulation of the second connecting rod to the outer door (105).

9. Turbofan engine (100) according to one of Claims 1 to 8, **characterized in that** the outer doors (105) are arranged between the mobile cowl (207a) and the fixed structure (206) in the stowed position so as to constitute an outer wall of the nacelle (102).

10. Aircraft (10) comprising at least one turbofan engine (100) according to one of the preceding claims.
